# FASCICULE DE BREVET EUROPEEN

(11) **EP 2 024 764 B1**
(45) Date de publication et mention de la délivrance du brevet: **24.07.2019**
(21) Numéro de dépôt: 07788842.8
(22) Date de dépôt: 06.06.2007
(51) Int. Cl.: G01V 15/00, E02D 29/14, G06K 19/04, G06K 19/077

(54) **DISPOSITIF DE VOIRIE A TRANSPONDEUR**
STRASSENNETZVORRICHTUNG MIT TRANSPONDER
ROAD SYSTEM DEVICE WITH TRANSPONDER

(30) Priorité: 07.06.2006 FR 0605067
(43) Date de publication de la demande: 18.02.2009
(73) Titulaire: Saint-Gobain PAM, 21 Avenue Camille Cavallier 54700 Pont-à-Mousson (FR); Araymond France, 38000 Grenoble (FR)
(72) Inventeur: CUNY, Arnaud, F-54119 Domgermain (FR); POIRSON, Henri, F-54380 Dieulouard (FR); BOUBTANE, Mohieddine, F-38170 Seyssinet-pariset (FR); LEGAT, Jean-Jacques, F-38690 Colombe (FR); GIRARD, Didier, F-69004 Lyon (FR)
(74) Mandataire: Lavoix
(86) Numéro de dépôt international: PCT/FR2007/000934
(87) Numéro de publication internationale: WO 2007/141424

(56) Documents cités:
- WO-A-02/42995
- WO-A-02/057550
- CA-A1- 2 196 474
- DE-A1- 19 848 011
- FR-A1- 2 844 813
- JP-A- 2000 273 889
- JP-A- 2003 027 517
- JP-A- 2003 034 941
- JP-A- 2003 213 713
- KR-A- 20040 039 578
- MOXOM: "Chips transponders algemene informatie RF ID" INTERNET ARTICLE, [Online] 30 août 2004 (2004-08-30), pages 1-3, XP002433347 Extrait de l'Internet: URL:http://web.archive.org/web/20040830051 631/http://www.moxom.nl/chips.htm> [extrait le 2007-05-11]

## Description

La présente invention concerne un dispositif de voirie tel que défini dans le préambule de la revendication 1.

L'état de la technique pris en compte comprend les documents FR2844813 ;KR 2004 0039578 ; JP2003 213713 ; JP2003 27517 ; WO02/57550 ; MOXOM « Chips transponders algemene informatie RF ID » ;JP 2000 273889 ; JP 2003 34941 ; CA-A1-2196474 ; DE 198 48 011 ; et WO 02/42995.

L'invention s'applique en particulier aux regards de chaussée ou de trottoirs destinés à la fermeture de cheminées d'accès à des réseaux d'eau souterrains, aux trappes de fermeture des chambres techniques d'accès à des réseaux câblés souterrains, mais également aux grilles pour l'absorption et l'évacuation des eaux usées ou pluviales ainsi qu'aux grilles servant à la protection des arbres.

On connaît du brevet français FR-A-2 844 813, qui est conforme au préambule de la revendication 1, un dispositif de voirie qui est muni d'un transpondeur. Le transpondeur est fixé au couvercle du dispositif de voirie par l'intermédiaire d'un bouchon de liaison qui est inséré dans un orifice de réception ménagé dans le couvercle du dispositif de voirie.

Afin d'ancrer le bouchon de liaison dans le couvercle, celui-ci comporte trois ergots disposés sensiblement à 120° l'un de l'autre par rapport à un axe central vertical du bouchon. Les ergots font saillie strictement radialement vers l'extérieur afin de pouvoir s'appuyer sur la surface inférieure du couvercle.

Bien que la retenue du bouchon décrit dans ce document soit assurée, l'invention a pour but d'augmenter encore la retenue du bouchon de liaison dans le dispositif de voirie.

A cet effet, l'invention a pour objet un dispositif de voirie du type indiqué dans le préambule de la revendication 1, caractérisé par la partie caractérisante de la revendication 1.

Selon des modes particuliers de réalisation, le dispositif selon l'invention comporte l'une ou plusieurs des caractéristiques mentionnées dans les revendications dépendantes.

L'invention sera mieux comprise à la lecture de la description qui va suivre, donnée uniquement à titre d'exemple et faite en se référant aux dessins annexés, sur lesquels :
- la Figure 1 montre en coupe axiale deux variantes d'un dispositif de voirie selon l'invention;
- la Figure 2 montre une vue en perspective du bouchon de liaison selon l'invention ;
- la Figure 3 montre une vue de côté du bouchon de liaison de la Figure 2;
- la Figure 4 montre une vue en coupe selon la ligne A-A de la Figure 3 ;
- la Figure 5 montre une vue de deux variantes d'un deuxième mode de réalisation d'un dispositif de voirie selon l'invention, la vue étant analogue à celle de la Figure 1 ;
- la Figure 6 montre une vue en perspective du clip supplémentaire de la Figure 5 ; et
- la Figure 7 montre une vue de côté du clip de la Figure 6.

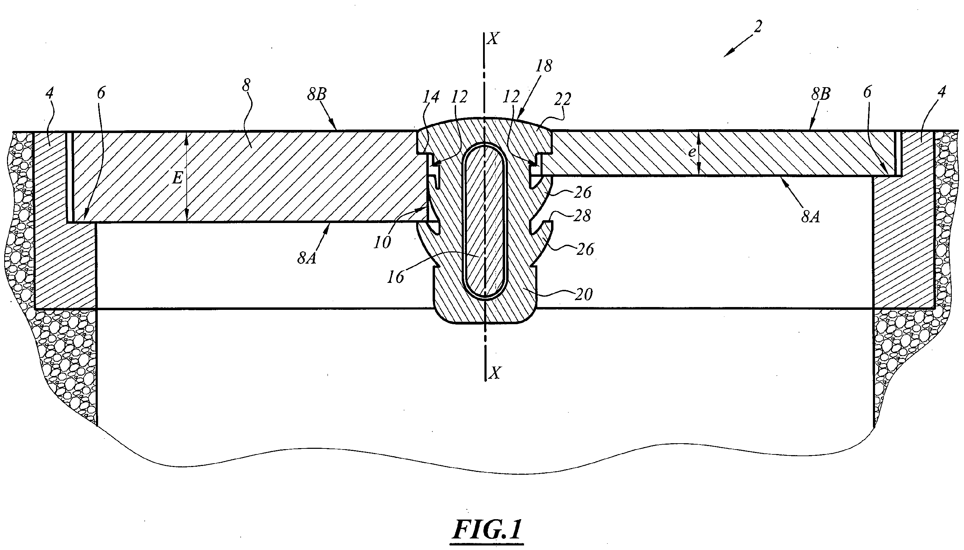

La Figure 1 montre en coupe deux variantes d'un dispositif de voirie selon l'invention, désigné par la référence générale 2.

Le dispositif de voirie 2 comprend un cadre 4 muni d'un rebord d'appui 6, et un couvercle 8 qui, à l'état fermé du dispositif de voirie 2, prend appui sur le rebord d'appui 6.

Le cadre 4 et le couvercle 8 sont de préférence fabriqués en fonte, notamment en fonte ductile.

Le couvercle 8 a une surface inférieure 8A et une surface supérieure 8B qui affleure à l'état fermé la face supérieure du cadre 4 et une surface de sol.

Le dispositif de voirie 2 selon l'invention peut comporter des couvercles 8 ayant différentes épaisseurs. Ainsi, le couvercle 8 peut avoir une épaisseur maximale E, ou une épaisseur minimale e, ou avoir une épaisseur qui est située entre ces deux épaisseurs E et e. La moitié gauche de la Figure 1 montre la variante avec un couvercle 8 ayant une épaisseur maximale E, tandis que la moitié droite de la Figure 1 montre le couvercle 8 ayant une épaisseur minimale e.

Un orifice de réception 10 est ménagé dans le couvercle 8, définissant une surface interne 12 ainsi qu'une partie élargie formant un épaulement d'appui 14.

Le dispositif de voirie 2 est également muni d'un transpondeur 16, ainsi que d'un élément de liaison du transpondeur 16 au couvercle 8, sous forme d'un bouchon de liaison 18 qui est inséré dans l'orifice de réception 10 du couvercle 8 et qui renferme le transpondeur 16.

Associé à un dispositif de lecture approprié, le transpondeur 16 permet la gestion du dispositif de voirie auquel il est fixé, notamment les opérations de maintenance du dispositif de voirie, et/ou la gestion du réseau d'eau ou du réseau câblé auquel le dispositif de voirie donne accès. Le transpondeur 16 est de préférence un transpondeur passif du type RFID.

Le bouchon de liaison 18 est réalisé en une matière amagnétique et électriquement isolante, cette matière absorbant par ailleurs les chocs et vibrations de manière à protéger le transpondeur 16 des perturbations auxquelles pourrait être soumis le couvercle 8.

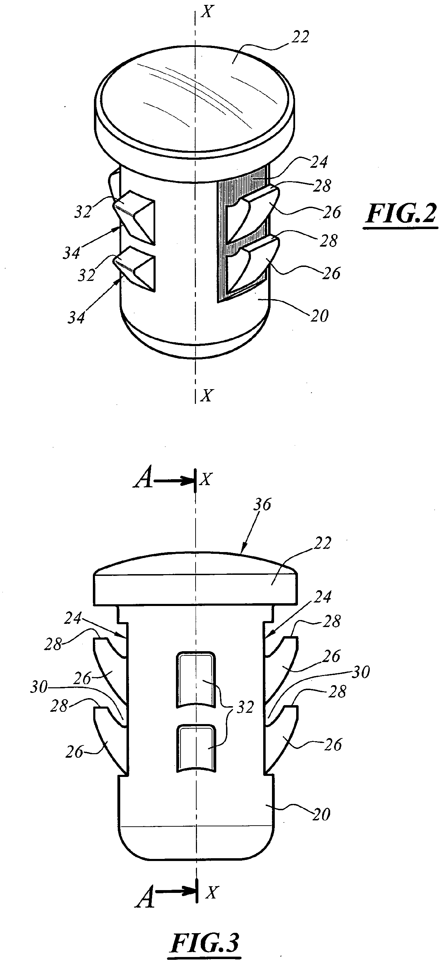

Comme ceci est visible sur la Figure 2, le bouchon de liaison 18 comporte un corps de base 20 de forme générale cylindrique à section de cercle s'étendant selon un axe central X-X et une tête radialement élargie 22 par rapport au corps de base 20.

Le corps de base cylindrique 20 du bouchon 18 présente deux méplats 24 diamétralement opposés, chaque méplat 24 étant muni d'une paire d'ergots de fixation principaux 26, flexibles et venus de matière avec le corps de base 20. Plus particulièrement, chaque paire d'ergots principaux flexibles 26 comporte un premier ergot principal supérieur 26 et un deuxième ergot principal inférieur 26, décalés l'un de l'autre axialement selon l'axe central X-X et alignés circonférentiellement selon l'axe central X-X. Les ergots principaux 26 ont la forme de lèvres dirigées vers la tête 22 du bouchon et sont flexibles essentiellement dans le sens tendant à les rapprocher du corps de base 20, facilitant ainsi l'insertion du bouchon de liaison 18 dans l'orifice 10 du couvercle 8. Chaque ergot principal 26 présente ainsi une extrémité solidaire du corps de base 20 et une extrémité libre 28 dirigée vers la tête 22, et délimite une contre-dépouille 30 radiale par rapport au corps de base 20, l'épaisseur de l'ergot principal 26 diminuant de l'extrémité solidaire du corps de base 20 vers l'extrémité libre 28. A l'état non monté, chaque ergot principal 26 s'étend selon une direction inclinée par rapport à l'axe central X-X en s'écartant de cet axe X-X dans le sens dirigé vers la tête 22.

Il est particulièrement bien visible sur le Figure 3 que les deux paires d'ergots principaux 26 sont décalées circonférentiellement et sont symétriques par rapport à l'axe central X-X.

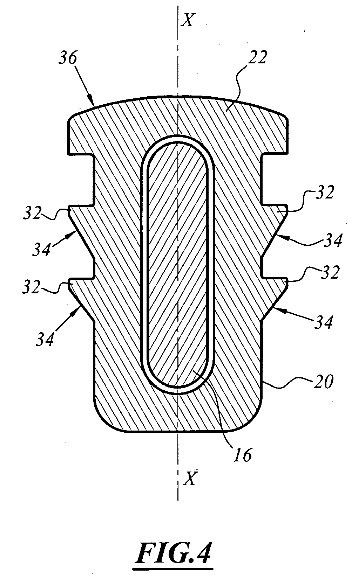

En outre, le bouchon de liaison 18 porte deux paires d'ergots de fixation secondaires 32, symétriques par rapport à l'axe central X-X et décalées de 90° par rapport aux deux paires d'ergots de fixation principaux 26. Plus particulièrement, chaque paire d'ergots de fixation secondaires 32 comporte un premier ergot secondaire supérieur 32 et un second ergot secondaire inférieur 32, décalés l'un de l'autre axialement selon l'axe central X-X et alignés circonférentiellement selon cet axe X-X. Chaque ergot de fixation secondaire 32 a une surface 34 inclinée par rapport à l'axe central X-X en s'évasant de cet axe X-X dans le sens dirigé vers la tête 22. Comme ceci est illustré sur la Figure 4, qui montre le bouchon de liaison 18 en coupe, les ergots de fixation secondaires 32 sont sans contre-dépouille radiale. Plus particulièrement, la section transversale de chaque ergot secondaire 32 est en forme de triangle. Selon une variante non représentée, la section transversale peut également être en forme de trapèze. Ainsi, les ergots de fixation secondaires 32 ont une résistance à la compression radiale plus importante que celle des ergots principaux 26.

On notera que le bouchon de liaison 18 est parfaitement centré dans l'orifice 10 du couvercle 8 en raison de la symétrie des deux paires d'ergots principaux 26 et des deux paires d'ergots secondaires 32 par rapport à l'axe central X-X, et grâce au décalage circonférentiel de 90° entre les paires d'ergots principaux 26 et les paires d'ergots secondaires 32. Il en résulte un centrage du transpondeur 16 dans son logement du bouchon 18, le transpondeur étant alors positionné de manière parfaitement perpendiculaire à la surface supérieure 8B du couvercle, ce qui a pour effet d'assurer une diffusion optimale du champ magnétique entourant le transpondeur et de permettre ainsi une liaison par ondes avec un récepteur.

On voit également sur la Figure 4 que la tête 22 comporte une surface extérieure 36, qui est dirigée à l'opposé du corps de base 20, et qui est bombée et convexe. Cette surface extérieure 36 s'étend sur au moins 90% de la surface de la projection axiale selon l'axe X-X de la tête 22. En conséquence, cette surface extérieure 36 empêche l'accumulation de saletés et d'autres détritus sur le bouchon de liaison 18 et empêche les eaux pluviales de stagner sur la face supérieure du bouchon de liaison 18. Ainsi, la fiabilité du dispositif de voierie 2 est augmentée.

De plus, la tête 22 s'applique contre l'épaulement 14 à l'état monté. En variante non représentée, on peut avantageusement ménager des rainures radiales dans la surface intérieure de la tête 22, c'est-à-dire dans la surface qui s'applique contre l'épaulement 14. Ces rainures radiales sont destinées à faciliter la flexion de la tête 22 pour permettre aux ergots de fixation principaux 26 de venir se positionner sous la surface inférieure 8A du couvercle.

Lors de l'insertion du bouchon de liaison 18 dans l'orifice 10 traversant ménagé dans le couvercle 8 d'épaisseur minimale e, les ergots de fixation principaux 26 sont tout d'abord repliés vers le corps de base 20 lors du franchissement de l'orifice traversant 10. Puis, les ergots principaux 26 reprennent leur forme initiale par relâchement élastique, après avoir franchi l'orifice 10. En position finale, l'extrémité libre 28 des ergots de fixation principaux 26 supérieurs est en butée contre la surface inférieure 8A du couvercle 8 et s'oppose au retrait du bouchon de liaison 18.

Dans le cas d'un couvercle 8 d'épaisseur maximale E, en position finale, les ergots principaux 26 supérieurs restent comprimés entre la surface interne 12 de l'orifice 10 et font ainsi obstacle au retrait du bouchon de liaison 18 par les forces de frottement, tandis que les ergots principaux 26 inférieurs sont dépliés et viennent en butée par leurs extrémités libres 28 contre la surface inférieure 8A du couvercle 8, s'opposant ainsi au retrait du bouchon de liaison 18.

Les ergots de fixation secondaires 32 s'opposent également à l'extraction du bouchon de liaison 18 hors de l'orifice 10. Ainsi, à épaisseur de couvercle minimale e, les ergots secondaires supérieurs 32 viennent en contact avec la surface inférieure 8A du couvercle 8 uniquement lorsque le bouchon 18 est soumis à une force de retrait élevée tendant à provoquer un fléchissement des ergots principaux supérieurs 26 vers le bas, les ergots secondaires supérieurs 32 prenant alors le relais pour s'opposer plus efficacement au retrait du bouchon 18. A épaisseur E de couvercle maximale, les ergots secondaires supérieurs 32 sont fortement comprimés contre la surface interne 12 de l'orifice 10 traversant et s'opposent ainsi au retrait du bouchon 18, en complément de l'action anti-retrait assurée par les ergots principaux 26 flexibles.

En résumé, le bouchon de liaison 18 selon l'invention permet d'augmenter sensiblement les forces nécessaires pour retirer le bouchon du couvercle, et s'adapte à différentes épaisseurs de couvercle.

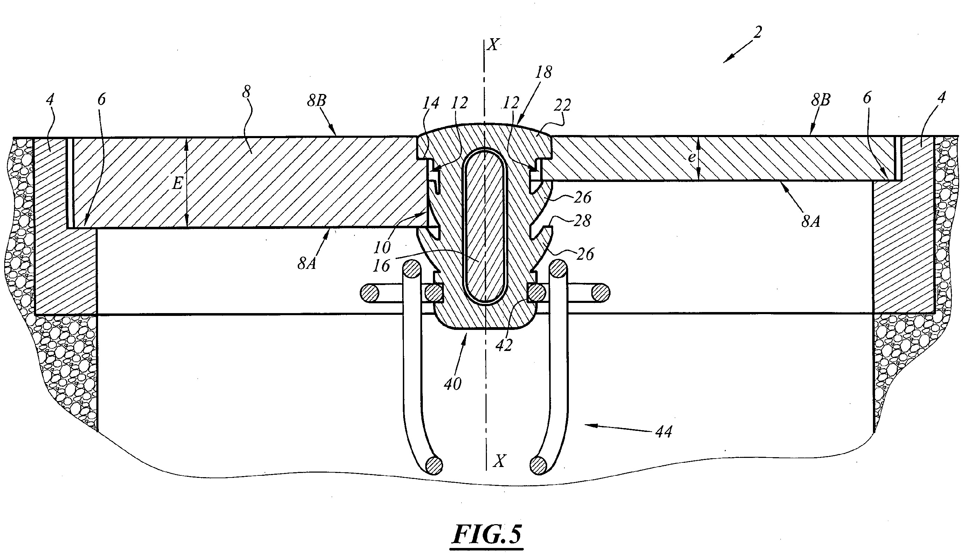

Sur les Figures 5 à 7 est représenté un deuxième mode de réalisation du dispositif de voirie selon l'invention, qui diffère du mode de réalisation précédemment décrit par ce qui suit. Les éléments analogues portent les mêmes références.

Le bouchon de liaison 18 comporte une extrémité libre 40, opposée à la tête 22.

Une gorge annulaire 42 de fixation est ménagée dans cette extrémité libre 22, axialement à l'écart des ergots de fixation principaux 26 et des ergots de fixation secondaires 32.

Une attache ou un clip supplémentaire 44 est encliquetée dans la gorge annulaire 42 et coopère avec celle-ci par complémentarité de formes. Le clip 44 forme ainsi un organe de fixation supplémentaire rapporté au bouchon de liaison 18.

Le clip 44 a des dimensions radiales supérieures à celles de l'orifice 10, de telle sorte que, lorsque le bouchon de liaison 18 est sollicité vers le haut afin d'être extrait de l'orifice 10, le clip 44 s'oppose à une telle extraction. Dans ce cas, le clip 44 s'applique contre la surface inférieure 8A du couvercle 8.

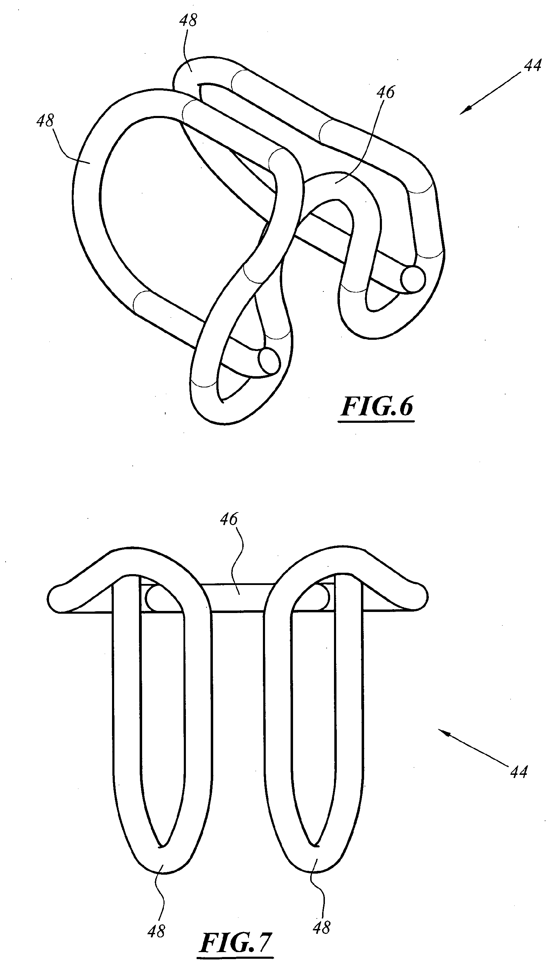

Comme ceci est particulièrement bien visible sur les Figures 6 et 7, le clip 44 est fabriqué d'une seule pièce en un fil. De préférence, il est fabriqué en un fil en acier ressort, et avantageusement en acier inoxydable.

Le clip 44 comporte une partie centrale 46, sensiblement en forme de « C », et deux parties latérales 48 sensiblement en forme de « U ». Le clip 44 est adapté pour être encliqueté radialement dans la gorge annulaire 42 par sa partie centrale 46.

## Revendications

1. Dispositif de voirie, du type comprenant
- une pièce de voirie (8), telle qu'un tampon, dans laquelle est ménagé un orifice de réception (10),
- un transpondeur (16), et
- un élément de liaison (18) du transpondeur (16) à la pièce de voirie (8) inséré dans l'orifice de réception (10), l'élément de liaison (18) comprenant un corps de base (20), le corps de base (20) étant muni d'organes de fixation principaux de l'élément de liaison à la pièce de voirie et d'un logement du transpondeur (16), le corps de base (20) définissant également un axe central (X-X),
les organes de fixation principaux comprenant au moins un premier ergot principal (26) qui fait saillie sur le corps de base (20),
**caractérisé en ce que**
à l'état non monté, ledit au moins premier ergot principal (26) s'étend selon une direction inclinée par rapport à l'axe central (X-X), et **en ce qu'**il (26) a une extrémité libre (28) avec une contre-dépouille radiale par rapport au corps de base (20), de telle sorte que cette extrémité libre se rapproche radialement du corps de base (20) lors de l'insertion de l'élément de liaison (18) dans l'orifice de réception (10).

2. Dispositif de voirie selon la revendication 1, **caractérisé en ce que** les organes de fixation principaux comprennent un second ergot principal (26) qui fait saillie sur le corps de base (20) et qui, à l'état non monté, s'étend selon une direction inclinée par rapport à l'axe central (X-X), et **en ce que** le second ergot principal (26) est axialement décalé par rapport à l'axe central (X-X) dudit premier ergot principal (26).

3. Dispositif de voirie selon l'une quelconque des revendications précédentes, **caractérisé en ce que** les organes de fixation principaux comprennent au moins un ergot principal supplémentaire (26) décalé circonférentiellement dudit premier ergot principal (26) par rapport à l'axe central (X-X).

4. Dispositif de voirie selon la revendication 3, **caractérisé en ce que** l'ergot principal supplémentaire (26) est symétrique du premier ergot principal (26) par rapport à l'axe central (X-X).

5. Dispositif de voirie selon l'une quelconque des revendications précédentes, **caractérisé en ce que** le corps de base (20) comporte un méplat (24) sur lequel est situé le ou plusieurs des organes de fixation principaux (26).

6. Dispositif de voirie selon l'une quelconque des revendications précédentes, **caractérisé en ce qu'**il comporte des organes de fixation secondaires comprenant au moins un ergot secondaire (32) ayant une surface (34) inclinée par rapport à l'axe central (X-X), et **en ce que** cet ergot secondaire (32) est sans contre-dépouille radiale.

7. Dispositif de voirie selon la revendication 6, **caractérisé en ce que** la section transversale de chaque ergot secondaire (32) est en forme de trapèze ou en forme de triangle.

8. Dispositif de voirie selon l'une quelconque des revendication précédentes, **caractérisé en ce que** l'élément de liaison comporte une tête (22) radialement élargie par rapport au corps de base (20), et **en ce que** les organes de fixation principaux (26) sont inclinés par rapport à l'axe central (X-X) suivant une direction s'écartant de cet axe dans le sens dirigé vers la tête (22).

9. Dispositif de voirie selon la revendication 8 prise ensemble avec l'une des revendications 6 ou 7, **caractérisé en ce que** les organes de fixation secondaires (32) sont inclinés par rapport à l'axe central (X-X) suivant une direction s'écartant de cet axe dans le sens dirigé vers la tête (22).

10. Dispositif de voirie selon l'une quelconque des revendications 8 ou 9, **caractérisé en ce que** la tête (22) a une surface extérieure (36) bombée convexe, dirigée à l'opposé du corps de base (20).

11. Dispositif de voirie selon l'une quelconque des revendications 8 à 10, **caractérisé en ce que** l'orifice de réception (10) forme un épaulement (14), et **en ce que** la tête (22) s'applique contre cet épaulement.

12. Dispositif de voirie selon l'une quelconque des revendications précédentes, **caractérisé en ce que** l'orifice de réception (10) définit une surface interne (12), et **en ce qu'**au moins un des ergots principaux (26) s'applique contre cette surface interne (12).

13. Dispositif de voirie selon l'une quelconque des revendications précédentes, **caractérisé en ce qu'**il comprend un organe de fixation supplémentaire (44) rapporté à l'élément de liaison (18), coopérant avec cet élément de liaison (18) par complémentarité de formes et adapté pour s'opposer à une extraction de l'élément de liaison (18) par application contre la surface inférieure (8A) de la pièce de voirie (8).

14. Dispositif de voirie selon la revendication 13, **caractérisé en ce que** l'élément de liaison (18) comporte une gorge de fixation (42) dans laquelle s'engage l'organe de fixation supplémentaire (44).

15. Dispositif de voirie selon la revendication 13 ou 14, **caractérisé en ce que** l'organe de fixation supplémentaire est un clip (44) adapté pour être encliqueté sur l'élément de liaison (18).

16. Dispositif de voirie selon la revendication 15, **caractérisé en ce que** le clip (44) est en fil de métal, notamment en acier à ressort.

17. Dispositif de voirie selon l'une quelconque des revendications précédentes, **caractérisé en ce qu'**il comprend un cadre (4) et un élément de recouvrement (8), et **en ce que** la pièce de voirie est formée par le cadre (4) ou par l'élément de recouvrement (8).

## Patentansprüche

1. Vorrichtung für Straßen, des Typs aufweisend
- ein Straßen-Bauteil (8), wie zum Beispiel eine Kanalabdeckung, in welchem eine Aufnahmeöffnung (10) ausgebildet ist,
- einen Transponder (16) und
- ein Element zur Verbindung (18) des Transponders (16) mit dem Straßen-Bauteil (8), welches in die Aufnahmeöffnung (10) eingesetzt ist, wobei das Element zur Verbindung (18) einen Grundkörper (20) aufweist, wobei der Grundkörper (20) mit Haupt-Organen zur Befestigung des Elements zur Verbindung an dem Straßen-Bauteil und mit einer Aufnahme für den Transponder (16) versehen ist, wobei der Grundkörper (20) auch eine zentrale Achse (X-X) definiert,
wobei die Haupt-Organe zur Befestigung wenigstens eine erste Haupt-Klaue (26) aufweisen, die von dem Grundkörper (20) aus vorsteht,
**dadurch gekennzeichnet, dass**
im nicht montierten Zustand die besagte wenigstens erste Haupt-Klaue (26) sich entlang einer Richtung erstreckt, die bezüglich der zentralen Achse (X-X) geneigt ist, und dass sie (26) ein freies Ende (28) hat, mit einer bezüglich des Grundkörpers (20) radialen Hinterschneidung, sodass dieses freie Ende sich dem Grundkörper radial nähert während des Einsetzens des Elements zur Verbindung (18) in die Aufnahmeöffnung (10).

2. Vorrichtung für Straßen gemäß Anspruch 1, **dadurch gekennzeichnet, dass** die Haupt-Organe zur Befestigung eine zweite Haupt-Klaue (26) aufweisen, die von dem Grundkörper (20) aus vorsteht und die sich, im nicht montierten Zustand, entlang einer Richtung erstreckt, die bezüglich der zentralen Achse (X-X) geneigt ist, und dass die zweite Haupt-Klaue (26) bezüglich der zentralen Achse (X-X) axial im Abstand von der ersten Haupt-Klaue (26) ist.

3. Vorrichtung für Straßen gemäß irgendeinem der vorhergehenden Ansprüche, **dadurch gekennzeichnet, dass** die Haupt-Organe zur Befestigung wenigstens eine zusätzliche Haupt-Klaue (26) aufweisen, die bezüglich der zentralen Achse (X-X) im Umfangsabstand von der ersten Haupt-Klaue (26) ist.

4. Vorrichtung für Straßen gemäß Anspruch 3, **dadurch gekennzeichnet, dass** die zusätzliche Haupt-Klaue (26) bezüglich der zentralen Achse (X-X) symmetrisch zu der ersten Haupt-Klaue (26) ist.

5. Vorrichtung für Straßen gemäß irgendeinem der vorhergehenden Ansprüche, **dadurch gekennzeichnet, dass** der Grundkörper (20) eine Abflachung (24) aufweist, an welcher das oder mehrere Haupt-Organe zur Befestigung (26) angeordnet sind.

6. Vorrichtung für Straßen gemäß irgendeinem der vorhergehenden Ansprüche, **dadurch gekennzeichnet, dass** sie aufweist Sekundär-Organe zur Befestigung, die wenigstens eine Sekundär-Klaue (32) aufweisen, die eine Fläche (34) hat, die bezüglich der zentralen Achse (X-X) geneigt ist, und dass diese Sekundär-Klaue (32) Radialhinterschneidungs-frei ist.

7. Vorrichtung für Straßen gemäß Anspruch 6, **dadurch gekennzeichnet, dass** der Querschnitt jeder Sekundär-Klaue (32) trapezförmig oder dreieckförmig ist.

8. Vorrichtung für Straßen gemäß irgendeinem der vorhergehenden Ansprüche, **dadurch gekennzeichnet, dass** das Element zur Verbindung einen Kopf (22) aufweist, der bezüglich des Grundkörpers (20) radial erweitert ist, und dass die Haupt-Organe zur Befestigung (26) bezüglich der zentralen Achse (X-X) geneigt sind entlang einer Richtung, die sich in Richtung zu dem Kopf (22) hin von dieser Achse entfernt.

9. Vorrichtung für Straßen gemäß Anspruch 8 in Verbindung mit einem der Ansprüche 6 oder 7, **dadurch gekennzeichnet, dass** die Sekundär-Organe zur Befestigung (32) bezüglich der zentralen Achse (X-X) geneigt sind entlang einer Richtung, die sich in Richtung zu dem Kopf (22) hin von dieser Achse entfernt.

10. Vorrichtung für Straßen gemäß irgendeinem der Ansprüche 8 oder 9, **dadurch gekennzeichnet, dass** der Kopf (22) eine Außenfläche (36) hat, die konvex gewölbt ist und in entgegengesetzt zu dem Grundkörper (20) gewandt ist.

11. Vorrichtung für Straßen gemäß irgendeinem der Ansprüche 8 bis 10, **dadurch gekennzeichnet, dass** die Aufnahmeöffnung (10) eine Schulter (14) ausbildet und dass der Kopf (22) gegen diese Schulter anliegt.

12. Vorrichtung für Straßen gemäß irgendeinem der vorhergehenden Ansprüche, **dadurch gekennzeichnet, dass** die Aufnahmeöffnung (10) eine Innenfläche (12) definiert und dass wenigstens eine der Haupt-Klauen (26) gegen diese Innenfläche (12) anliegt.

13. Vorrichtung für Straßen gemäß irgendeinem der vorhergehenden Ansprüche, **dadurch gekennzeichnet, dass** sie ein zusätzliches Organ zur Befestigung (44) aufweist, das an dem Element zur Verbindung (18) angebracht ist und das mit diesem Element zur Verbindung (18) zusammenwirkt via Formkomplementarität und das angepasst ist, um einer Entnahme des Elements zur Verbindung (18) entgegenzuwirken durch Anlage gegen die Innenfläche (8A) des Straßen-Bauteils (8).

14. Vorrichtung für Straßen gemäß Anspruch 13, **dadurch gekennzeichnet, dass** das Element zur Verbindung (18) einen Fixierungshals (42) aufweist, in welchen das zusätzliche Organ zur Befestigung (44) eingreift.

15. Vorrichtung für Straßen gemäß Anspruch 13 oder 14, **dadurch gekennzeichnet, dass** das zusätzliche Organ zur Befestigung ein Klipp (44) ist, der angepasst ist, um an das Element zur Verbindung (18) geklippt zu sein.

16. Vorrichtung für Straßen gemäß Anspruch 15, **dadurch gekennzeichnet, dass** der Klipp (44) ein Draht aus Metall, insbesondere aus Federstahl, ist.

17. Vorrichtung für Straßen gemäß irgendeinem der vorhergehenden Ansprüche, **dadurch gekennzeichnet, dass** es aufweist einen Rahmen (4) und ein Abdeck-Element (8), und dass das Straßen-Bauteil von dem Rahmen (4) oder von dem Abdeck-Element (8) gebildet ist.

## Claims

1. Roadway device, of the type comprising
- a roadway part (8), such as a plug, in which a receiving opening (10) is provided,
- a transponder (16), and
- a connecting element (18) of the transponder (16) to the roadway part (8) inserted in the receiving opening (10), the connecting element (18) comprising a base body (20), the base body (20) being provided with main fixing means of the connecting element to the roadway part
and with a housing of the transponder (16), the base body (20) likewise defining a central axis (X - X),
the main fixing means comprising at least one first main lug (26) which projects over the base body (20),
**characterised in that**
in the non-mounted state, said at least first main lug (26) extends according to a direction inclined relative to the central axis (X - X),
and **in that** it (26) has a free end (28) with a radial undercut relative to the base body (20) such that this free end approaches the base body (20) radially during insertion of the connecting element (18) into the receiving opening (10).

2. Roadway device according to claim 1, **characterised in that** the main fixing means comprise a second main lug (26) which projects over the base body (20) and which, in the non-mounted state, extends according to a direction inclined relative to the central axis (X - X), and **in that** the second main lug (26) is axially offset relative to the central axis (X - X) of said first main lug (26).

3. Roadway device according to any of the preceding claims, **characterised in that** the main fixing means comprise at least one supplementary main lug (26) offset circumferentially to said first main lug (26) relative to the central axis (X - X).

4. Roadway device according to claim 3, **characterised in that** the supplementary main lug (26) is symmetrical to the first main lug (26) relative to the central axis (X - X).

5. Roadway device according to any of the preceding claims, **characterised in that** the base body (20) comprises a flat surface (24) on which there is situated the or a plurality of main fixing means (26).

6. Roadway device according to any of the preceding claims, **characterised in that** it comprises secondary fixing means comprising at least one secondary lug (32) having a surface (34) inclined relative to the central axis (X - X), and **in that** this secondary lug (32) is without a radial undercut.

7. Roadway device according to claim 6, **characterised in that** the transverse section of each secondary lug (32) is in trapezoidal form or triangular form.

8. Roadway device according to any of preceding claims, **characterised in that** the connecting element comprises a head (22) radially enlarged relative to the base body (20), and **in that** the main fixing means (26) are inclined relative to the central axis (X - X) according to a direction deviating from this axis in the direction directed towards the head (22).

9. Roadway device according to claim 8, taken together with one of claims 6 or 7, **characterised in that** the secondary fixing means (32) are inclined relative to the central axis (X - X) according to a direction deviating from this axis in the direction directed towards the head (22).

10. Roadway device according to any of the claims 8 or 9, **characterised in that** the head (22) has a convex bulging exterior surface (36), directed in the opposite direction to the base body (20).

11. Roadway device according to any of the claims 8 to 10, **characterised in that** the receiving opening (10) forms a shoulder (14), and **in that** the head (22) abuts against this shoulder.

12. Roadway device according to any of the preceding claims, **characterised in that** the receiving opening (10) defines an internal surface (12), and **in that** at least one of the main lugs (26) abuts against this internal surface (12).

13. Roadway device according to any of the preceding claims, **characterised in that** it comprises a supplementary fixing means (44) connected to the connecting element (18), cooperating with this connecting element (18) by complementarity of shapes and adapted in order to oppose extraction from the connecting element (18) by abutting against the lower surface (8A) of the roadway part (8).

14. Roadway device according to claim 13, **characterised in that** the connecting element (18) comprises a fixing throat (42) in which the supplementary fixing means (44) engages.

15. Roadway device according to claim 13 or 14, **characterised in that** the supplementary fixing means is a clip (44) adapted to be snapped onto the connecting element (18).

16. Roadway device according to claim 15, **characterised in that** the clip (44) is made of metal wire, in particular made of spring steel.

17. Roadway device according to any of the preceding claims, **characterised in that** it comprises a frame (4) and a covering element (8), and **in that** the roadway part is formed by the frame (4) or by the covering element (8).
